# EUROPEAN PATENT APPLICATION

(11) **EP 4 230 751 A2**
(43) Date of publication of application: **23.08.2023**
(21) Application number: 23175801.2
(22) Date of filing: 26.07.2022
(51) Int. Cl.: C22B 1/00, C22B 3/16, C22B 3/44, C22B 7/00, C22B 26/12, H01M 10/54

(54) **GREEN METHOD FOR RECOVERING LITHIUM AND IRON FROM LITHIUM BATTERIES**

(30) Priority: 26.07.2021 FR 2108116
(62) Divisional of application: 22757337.5
(71) Applicant: TOTALENERGIES ONETECH, 92400 Courbevoie (FR)
(72) Inventor: BENREZKALLAH, Yassine, 64018 Pau Cedex (FR); DESPINOIS, Frank, 64018 Pau Cedex (FR); BOCQUIER, Rémy, 64018 Pau Cedex (FR); ALBERT, Alain, 64018 Pau Cedex (FR); NAUDI, Frédéric, 64018 Pau Cedex (FR); GOUSSET, Cédric, 33000 Bordeaux (FR)
(74) Representative: Bandpay & Greuter

(57) **Abstract**

The disclosure relates to a method for recovering lithium (Li) and iron (Fe) from a substrate (S) containing LiFePO₄/C₍ₛ₎, wherein the substrate (S) further contains nickel, and/or cobalt, the method comprising the steps of:
i.- Bringing the substrate (S) into contact with an aqueous leaching solution comprising an organic acid chosen from alkylsulfonic, alkylarylsulfonic, arylsulfonic acids, ethylenediamine-N,N'-bis(2-hydroxyphenylacetic acid ) or a mixture thereof, and optionally an oxidizing agent, whereby a liquid phase L₁ rich in lithium and iron is recovered;
i'.- Extraction of the nickel and/or the cobalt from the liquid phase L₁ obtained in step i), according to an extraction step (E_{NC}), prior to step ii);
ii.- Precipitation of iron in the liquid phase L₁ obtained in step i) and having been subjected to the extraction step (E_{NC}), and recovery of the iron precipitate;
iii.- Precipitation of lithium in the L₂ liquid phase obtained in step ii) and recovery of the lithium precipitate; and optionally
iv.- Recovery of the liquid phase L₃ obtained in step iii) and recovery of the organic acid used in step i).

## Description

### Technical Field

The present disclosure relates to a method for recovering lithium and iron from a substrate containing LiFePO_{4/}C(s), in particular from used LFP-type batteries and production scrap. The disclosure also relates to a method for recycling lithium batteries and more particularly used LFP batteries, using the lithium and the iron recovered according to the method of the disclosure.

### Background

The market for lithium accumulators (or batteries), also known as Li-ion accumulators or (Li-ion batteries), is currently experiencing strong growth due to new applications linked mainly to the emergence and development of hybrid vehicles, electric vehicles and electrical appliances. These Li-ion batteries tend to supplant earlier technologies such as nickel/cadmium and nickel/hydride metal and sodium batteries.

In the field of lithium batteries, LFP-type batteries in which the electrodes are made of lithium iron phosphate (LiFePO₄) and graphite, optionally doped with manganese (LMFP-type batteries), or even with nickel, cobalt (SLFP batteries) are found in many applications. The main applications of these batteries are electric vehicles (EV), hybrid vehicle (HEV), rechargeable hybrid vehicle (PHEV), rechargeable urban transport at each station (trams, buses), electricity storage and charging infrastructure (PHEV and EV).

In addition, growing environmental constraints require battery producers to take on the recycling of batteries marketed.

Recently, particular attention has been turned to the problem of the resources necessary for developing technologies, in particular rare and strategic resources.

Lithium is thus one of the mineral raw materials classified as medium to high criticality in terms of supply risk and in terms of strategic importance for the industry. Also, LFP batteries are directly affected by this criticality, and there is a growing desire to encourage the reuse of materials in a "closed loop" for certain sectors that consume large amounts of such materials. More particularly, the materials contained in these batteries and whose reuse is of interest are iron, lithium, manganese, nickel and cobalt, the main constituents of the electrodes of these batteries.

To date, battery recycling processes can be divided into two large families: pyrometallurgical treatments and hydrometallurgical treatments.

The pyrometallurgical treatments which consist in burning, in a reducing medium, the accumulators in their entirety, allow the recovery of heavy metals such as Co, Ni, Mn, Cu but do not allow the recovery of lithium, which is generally eliminated in the fumes. The hydrometallurgical approach, which has less impact from an environmental point of view, is generally favored when the recovery of lithium is envisaged.

Today, it is increasingly important to have a viable recycling process to extract the metallic elements from used LFP batteries to enable the sustainable deployment of this technology. The hydrometallurgical extraction process generally includes the following steps of:
1- discharging the used LFP batteries so as to release the residual electricity;
2- mechanical treatment for grinding the batteries so as to recover the black mass containing the cathodic and anodic active materials of the electrodes (iron and lithium, cobalt, etc.), in a powder form;
3- leaching of the black mass, consisting in dissolving the non-carbonaceous active materials using a strong acid (for example HCl or H₂SO₄);
4- separation of the metals to be recovered by precipitation by adding various additives.

Such a hydrometallurgical method is described in application WO 2012/072619 which relates to the recovery of lithium and iron from lithium iron phosphate (LiFePO4) contained in LFP batteries. More particularly, this document discloses a method allowing acidic, selective leaching of lithium. Thus, the substrate containing LiFePO4 is brought into contact with a leaching solution containing dioxygen (O₂) or hydrogen peroxide (H₂O₂) as an oxidizing agent and sulfuric acid, whereby we obtain the following reaction:

4 LiFePO₄ + 2 H₂SO₄ + O₂ → 2 Li₂SO₄ + 4 FePO₄ ↓ + 2 H₂O

The FePO₄ precipitate is then separated by filtration from the leachate containing lithium in the form of Li₂SO₄. The lithium is then separated from the solution by precipitation in the form of lithium carbonate.

However, the mineral acids, such as sulfuric acid, used in these hydrometallurgical processes are generally very strong acids, expensive, difficult to handle on a large scale and their application can lead to the consumption of a large quantity of water, corrosion of equipment, alteration of non-metallic components and generate a lot of secondary pollution. Secondary pollution generated by conventional mineral acids must be treated appropriately, which requires the consumption of a large amount of water and energy, thus making hydrometallurgical processes very expensive and environmentally unfriendly. Hydrometallurgical processes using weak organic acids, in particular so-called "green" acids due to their low environmental impact, have also been described in the literature. Thus, by way of example, a method for recovering lithium and cobalt from used batteries, implementing, as a leaching solution, a mixture of iminodiacetic acid, malic acid and ascorbic acid has been described (Nakaya et al, "Use of mild organic acid reagents to recover the Co and Li from spent Li-ion batteries", Waste Management 2016). However, as these acids are weak, that is to say that the pkₐ is greater than 3 or 4, the complexation of the metal species is relatively weak and it is necessary to heat the leaching solution to 80°C to improve the extraction. Furthermore, the recycling of the acid mixture used for the leaching is not envisaged so that this process does not solve the problem of the treatment of the effluents generated as secondary waste.

Used LFP batteries are considered valuable waste, so there is a real need to provide a sustainable, environmentally friendly and cost-effective lithium and iron recovery method to enable their recycling.

### Summary

The disclosure thus aims to overcome the drawbacks of the methods of the prior art by proposing a method for recycling a lithium battery accumulator and more particularly a battery whose electrodes are based on LFP and/or LFP/Mn and / or LFP/NiCoAlO, this method making it possible to recover a large quantity and large number of materials, some of which are likely to be reintroduced into the production chain of new accumulators but not limited to "noble" materials, such as metals lithium, iron, manganese, cobalt and nickel.

More particularly, the inventors were able to show that by using specific organic acids, instead of the mineral acids used in the state of the art as a leaching solution, it was possible to effectively recover the lithium, and the iron contained in the lithium iron phosphate of LFP-type batteries, but also to recover the organic acid and reuse it for leaching. Advantageously, these organic acids can effectively complex the metallic elements without it being necessary to heat the leaching medium. In addition to their interesting chelating properties, the implementation of these weak organic acids also makes it possible to limit the corrosion of equipment and also advantageously makes it possible to drastically reduce water consumption and therefore the generation of secondary pollutants. Finally, besides the fact that the method according to the disclosure advantageously makes it possible to recycle and/or regenerate the acid used for the leaching, certain organic acids such as methylsulfonic acid are advantageously biodegradable, which correspondingly reduces the environmental impact of the process according to the disclosure.

In addition, the implementation of specific precipitation conditions advantageously makes it possible to selectively recover lithium on the one hand and iron on the other hand, in the form of precipitates of lithium (Li₂CO₃) and iron (FePO₄), which can be then treated to isolate lithium and/or iron. The process advantageously makes it possible to obtain these precipitates with a very good degree of purity, which makes them excellent sources of lithium and iron for the manufacture of new LFP batteries.

### Brief Description of the Drawings

FIG.s 1 and 2 show examples of providing a longitudinal battery casing to a conveyor belt according to an example of the method (C);
FIG. 3 shows an example of cutting each extremity of a longitudinal battery casing according to an example of the method (C);
FIG. 4 shows an example of removing a rolled she et from a battery casing according to an example of the method (C);
FIG.s 5 to 8 show examples of the unrolling of a sheet of the method (C);
FIG.s 9 to 11 show examples of separating the layers according to an example of the method (C);
FIG.s 12 to 18 show examples of recuperating precursory elements during the brushing of the method (C); and
FIG.s 19 to 22 show examples of a processing chain according to an example of the method (C).

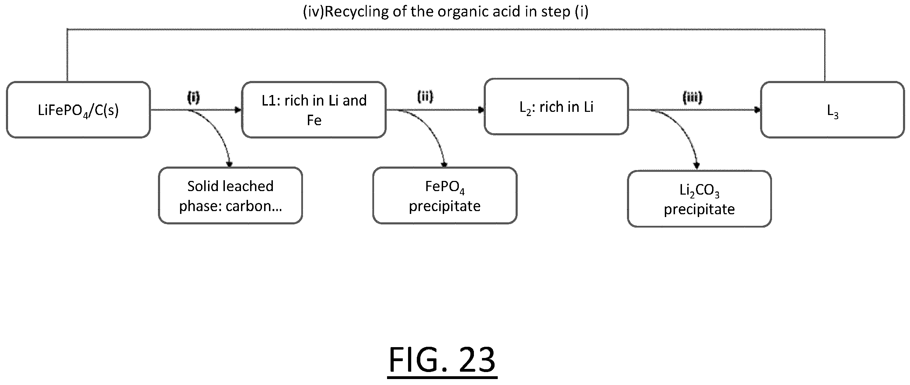

FIG. 23 schematically represents the steps implemented in the method (A) according to the disclosure.

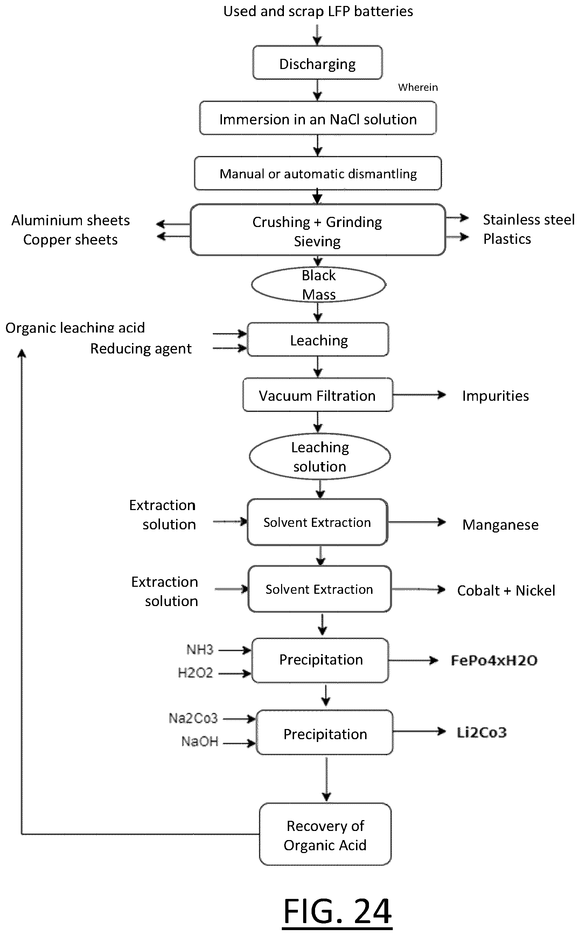

FIG. 24 is a diagram of the process for recycling used batteries of the LFP type according to the disclosure.

### Detailed Description

Process for the recovery of lithium and iron from a substrate (S) containing LiFePO_{4/}C(ₛ) (Method A)

Thus, the disclosure relates, according to a first aspect, to a method for recovering lithium and iron from a substrate (S) containing LiFePO_{4/}C₍ₛ₎, the method comprising the steps of:
i.- Bringing the substrate (S) into contact with an aqueous leaching solution comprising an organic acid chosen from alkylsulfonic, alkylarylsulfonic, arylsulfonic acids or ethylenediamine-N,N'-bis(2-hydroxyphenylacetic acid) or a mixture thereof, whereby a liquid phase L₁ rich in lithium and iron is recovered;
ii.- Precipitation of iron in the liquid phase L₁ obtained in step i), and recovery of the iron precipitate;
iii.- Precipitation of lithium in the L₂ liquid phase obtained in step ii) and recovery of the lithium precipitate; and optionally
iv.- Recovery of the liquid phase L3 obtained in step iii) and recovery of the organic acid used in step i).

### Acid Leaching Step i)

Step i) comprises bringing the substrate (S) into contact with an aqueous leaching solution comprising an organic acid chosen from alkylsulfonic, alkylarylsulfonic, arylsulfonic acids, ethylenediamine-N,N'-bis (2-hydroxyphenylacetic acid) or a mixture thereof, whereby a liquid phase L₁ rich in lithium and iron is recovered.

More specifically, step i) includes:
- Bringing into contact with an aqueous leaching solution comprising an organic acid chosen from alkylsulfonic, alkylarylsulfonic, arylsulfonic acids, ethylenediamine-N,N'-bis (2-hydroxyphenylacetic acid) or a mixture thereof,
- The separation of the leached substrate (S) from the leaching solution; and
- The recovery of the leaching solution obtained, also referred to below as liquid phase L₁.

The leaching step i) according to the disclosure is carried out with an aqueous solution containing the organic acids chosen from alkylsulfonic, alkylarylsulfonic, arylsulfonic acids or ethylenediamine-N,N'-bis (2-hydroxyphenylacetic acid). The water used in this step is in particular demineralised water.

Preferably, the sulphonic acids used in step i) are methyl sulphonic acid (also designated MSA), paratoluene sulphonic acid (also designated TSA, or TsOH), benzene sulphonic acid. Preferably, the organic acid is chosen from methylsulfonic acid, paratoluenesulfonic acid, benzenesulfonic acid, ethylenediamine-N,N'-bis (2-hydroxyphenylacetic acid) or a mixture thereof.

These organic acids are particularly advantageous in that they have a relatively low pKa, typically between 2 and 3, good chelating properties, are miscible with water and can be separated from the aqueous leaching solution by various methods, in particular by simple distillation.

Preferably, the aqueous leaching solution comprises an oxidizing agent.

The oxidizing agent optionally used in the leaching step makes it possible to oxidize the metals present in the substrate (S) to their highest oxidation level and thus to promote their dissolution in the leaching solvent and therefore their extraction from the substrate (S). The oxidizing agent used is advantageously HzOz.

The oxidizing agent used in step i) can be chosen from hydrogen peroxide.

The concentration of oxidizing agent in the medium can vary widely. By way of example, the concentration of the hydrogen peroxide solution added to the substrate can vary from 6 to 24% (v/v), in particular between 18 and 22% (v/v), the ratio by volume corresponding to the volume of hydrogen peroxide added to the total volume of the leaching solution obtained in step i), including in particular the organic acid, water and hydrogen peroxide. For example, the chemical reaction implemented with methylsulfonic acid and H₂O₂ as an oxidizing agent is as follows (1):

2LiFePO₄(s) + 2H⁺+2 CH₃SO₃⁻ + H₂O₂ → 2Li⁺ + 2 Fe³⁺+ 2PO4³⁻⁺2CH₃SO₃⁻ + 2H₂O

Leaching with the organic acids according to the disclosure makes it possible in particular to recover, in the liquid phase, in solution, Li⁺, Fe³+ and PO₄²⁻ ions and therefore to separate them from the solid phase of the substrate (S).

The substrate (S) containing LiFePO₄/C₍ₛ₎, is a solid substrate, preferably derived from an electrode material of LFP-type batteries, in particular used or discarded during manufacture. It may correspond in particular to the black mass resulting from the mechanical treatment of grinding used LFP batteries, implemented in hydrometallurgical processes. Alternatively, it may correspond to a precursory ink directly extracted in a non-grinding process, such as the one described later (i.e. the substrate (S) is precursory ink obtained from said non-grinding extraction process). By " LFP-type batteries" is meant, within the meaning of the present description, a battery or an accumulator comprising an electrode made of lithium iron phosphate (LiFePO₄) and graphite, and which may in particular contain other elements such as manganese , nickel and/or cobalt. The expression "LFP-type batteries" therefore includes conventional LFP batteries, but also LMFP or SLFP batteries, for example. The substrate (S) is generally a carbonaceous material comprising LFP battery electrode materials. It may preferably be in the form of a ground material, the particles of which have a size of between 10 and 100 µm. This ground material may in particular contain, on the one hand, residues of anodic materials, in particular aluminum, copper, and graphite carbon and, on the other hand, residues of cathodic materials, such as iron, lithium , nickel, cobalt, manganese and graphite carbon. Alternatively, the substrate (S) may be in the form of a brushed material, i.e. a powder. This powder may contain cathodic materials such as, for example, iron, nickel, lithium, graphite, cobalt, and/or manganese.

According to one embodiment, the organic acid used for the leaching of the substrate (S) in step i) has a concentration of between 3 and 5 mol.L⁻¹.

The mass of solid substrate (S) implemented in step i), relative to the total volume of aqueous leaching solution is generally between 40 and 100 g/L, and is preferably between 60 and 80 g/L .

The step of bringing the substrate (S) into contact with the organic acid and optionally the oxidizing agent is generally carried out at a pH below 4, generally between 0.5 and 2.5.

This step is preferably carried out at room temperature, in particular with agitation, in particular with ultrasound.

Even if the duration of contacting can vary to a large extent, it is generally between 1 hour and 2 hours, and may in particular be 90 minutes. This leaching step can be monitored, for example by measuring the lithium or iron content present either in the leaching solution, or in the substrate (S) before separation of the solid phase and the liquid phase, in particular by "Inductively Coupled Plasma" (ICP).

At the end of the contacting step, the solid substrate (S) is separated from the leaching solution, notably by filtration, in particular by vacuum filtration, and the leachate or leaching solution, forming the liquid phase L₁, is recovered.

This liquid phase L₁ is particularly rich in lithium, in iron, and in other elements possibly present in the substrate (S) before leaching such as manganese, cobalt and/or nickel, while the leached substrate (S) mainly contains carbon and other impurities such as aluminum, copper and polymers. As can be seen from equation (1) above, the liquid phase L₁ contains in particular Li⁺, Fe³+ et PO₄³⁻ in aqueous solution.

### Iron Precipitation Step ii)

Step ii) comprises the precipitation of the iron in the liquid phase L₁ obtained in stage i), and the recovery of the iron precipitate obtained.

According to one embodiment, an FePO₄ precipitate is recovered.

According to one embodiment, step ii) comprises the addition of an ammonium hydroxide (NH₄OH) solution to the liquid phase L₁.

According to one embodiment, step ii) is carried out at a pH of between 3 and 5, preferably at a pH of approximately 4.

The iron precipitation step may be carried out in the presence of an oxidizing agent such as hydrogen peroxide. The oxidizing agent advantageously makes it possible to convert all the Fe²⁺ ions possibly present in the liquid phase L₁ into Fe³⁺ and therefore to improve the precipitation and therefore the rate of recovery of the iron in the solution.

According to one embodiment, a concentrated solution of ammonium hydroxide is added to the liquid phase L1 recovered in step i) so as to reach a pH close to 4.

The chemical reaction that occurs is as follows (2):

2 Fe³+ + 2 PO4³⁻ + _{X}NH₄OH → 2 FePO₄ₓH₂O + ₓNH₄⁺ + OH-

The FePO₄ precipitate obtained is separated from the liquid phase L₂ obtained, in particular by filtration, in particular by vacuum filtration. The FePO₄ precipitate on the one hand, and the liquid phase L₂ on the other hand, are recovered.

The recovered FePO₄ precipitate may then be washed several times with demineralized water and then heat treated, for example at a temperature between 60 and 80° C, for a period of approximately 24 hours, whereby a precipitate of purified FePO₄ is obtained.

### Lithium Precipitation Step iii)

Step iii) comprises the precipitation of lithium in the liquid phase L₂ obtained in stage ii) and the recovery of the lithium precipitate.

According to one embodiment, a Li₂CO₃ precipitate is recovered.

Thus, in one embodiment, step iii) comprises the addition of a solution of alkaline metal carbonate or alkaline-earth metal carbonate to the liquid phase L₂, in particular a solution of sodium carbonate. In practice, the latter is added until a basic pH is reached, in particular greater than 11.

In one embodiment, step iii) is carried out at a pH of between 11 and 13, preferably at a pH of approximately 12.

The reaction that occurs is as follows (3):

Na₂CO₃₍ₛ₎ + 2 Li⁺ → Li₂CO₃₍ₛ₎ + 2 Na⁺

The solution can be heated to a temperature between 80°C and 100°C.

According to one embodiment, before addition of an alkali metal carbonate solution or alkaline-earth metal carbonate solution, the liquid phase L₂ is treated beforehand with an alkali metal or alkaline-earth metal hydroxide such as sodium hydroxide. This step advantageously makes it possible to eliminate from the aqueous phase L₂ any undesirable metals such as iron, aluminum and copper, in the form of hydroxide precipitates, before the precipitation of the lithium. The latter are separated from the aqueous phase L₂, typically by filtration.

The Li₂CO₃ precipitate obtained is then separated from the liquid phase L₃, in particular by filtration, in particular by vacuum filtration.

The recovered Li₂CO₃ precipitate may then be washed several times with demineralized water and then heat treated, for example at a temperature of approximately 100° C, for a period of approximately 48 hours, whereby a precipitate of purified Li₂CO₃ is obtained.

Lithium carbonate Li₂CO₃, can be converted into lithium chloride by reaction with hydrochloric acid:

Li₂CO₃ + 2HCl → 2LiCl + H₂O + CO₂

Lithium chloride is used in many applications, such as in the production of metallic lithium by electrolysis, as a soldering flux for aluminum, as an electrolyte in lithium battery technology, as a desiccant for drying fluxes air, in organic synthesis or in biochemical applications.

### Step iv) Recovery of the Organic Acid from Leaching

The method according to the disclosure may comprise a step for recovering the liquid phase L₃ obtained in step iii) so as to recover the organic acid used in step i).

The organic acid can be recovered by different processes such as distillation (vacuum distillation), electrolytic extraction or diffusion dialysis (membrane separation). According to one embodiment, the organic acid is recovered by distillation. Advantageously, the organic acid thus recovered can be reused in step i), for the leaching of a new substrate (S).

### Extraction of Mn, de Ni and/or Co

Some LFP type batteries may contain manganese, nickel and/or cobalt.

These metallic elements can be recovered from the liquid phase L₁ by extraction, in particular before step ii) of iron precipitation.

Thus, in one embodiment, the substrate (S) additionally contains manganese (Mn).

According to one embodiment, the manganese is extracted from the liquid phase L₁ obtained in step i), according to an extraction step (EM), prior to step ii). The solvent used in this step can be chosen in particular from di-(2-ethylhexyl) phosphoric acid D2EHPA, extractant N,N,N',N'-tetraoctyl diglycolamide (TODGA).

In one embodiment, the substrate (S) additionally contains nickel and/or cobalt. According to one embodiment, the nickel and/or the cobalt are extracted from the liquid phase L₁ obtained in step i), according to an extraction step (E_{NC}), prior to step ii). The solvent used in this step can be chosen in particular from bis(2,4,4-trimethylpentyl)phosphinic acid (Cyanex^{®} 272) and bis(2,4,4-trimethylpentyl)dithiophosphinic acid (Cyanex^{®} 301). According to another embodiment, the cobalt can be separated from the nickel by adding an ionic liquid based on phosphonium as described in the literature (Onghena, Bieke, et al. "Cobalt (II)/nickel (II) separation from sulfate media by solvent extraction with an undiluted quaternary phosphonium ionic liquid." RSC advances, 7.57 (2017): 35992-35999. According to one embodiment, if applicable, the extraction step (E_{M}) is carried out before the extraction step (E_{NC}). In fact, in the opposite case, the presence of manganese in the presence of a Cyanex 272 type solvent would reduce its capture efficiency and therefore alter the extraction efficiency of cobalt and/or nickel.

Process for recovering lithium and iron from used LFP type batteries (Method B) According to a second aspect, the disclosure relates to a method for recycling (e.g. recovering lithium and iron from) LFP type batteries, said method comprising the steps of:
a.- Crushing of LFP type batteries;
b.- Sieving the ground material obtained, whereby a fine fraction of substrate (S) containing LiFePO₄/C₍ₛ₎ is recovered; and
c.-Treatment of the substrate (S) according to the process described above, whereby the lithium and the iron contained in the batteries of the LFP type are recovered.

The batteries may comprise batteries that have been manufactured but have not been used for their intended purpose, i.e. a battery that is a production waste product, or not entirely used. Alternatively or additionally, the batteries may comprise batteries that have been used for their intended purpose, i.e. a battery that has been mostly or entirely used. In other words, whatever the reason for the end of life for the battery, the recycling may follow as a next step. It is thus meant in the broad sense batteries which are not or no longer suitable for use. This therefore includes used batteries but also production scrap.

Regarding steps a) and b) allowing the recovery of the substrate (S), i.e. the black mass containing LiFePO₄/C₍ₛ₎, particular reference may be made to the methods described in the literature.

Prior to mechanical treatment step a), the batteries may be previously discharged so as to avoid any self-ignition problems that could lead to explosions during dismantling. The step of discharging the batteries prior to step a) can be carried out by conventional methods, in particular using resistors. It is preferably carried out by bringing used batteries into contact with a 35% sodium chloride (NaCI) solution for a sufficient time to reach a voltage of 0 volts. A period of 48 hours is generally sufficient. This method advantageously saves time compared to conventional methods.

After discharging the used batteries, and before step a), the method may comprise a step of dismantling the LFP batteries and separating the various elements constituting it, in particular the plastic envelope, the metal casing and the electrodes, anode of on the one hand, and cathode on the other hand.

According to a preferred embodiment, only the cathodes recovered from used LFP batteries are subjected to step a) of grinding.

Process for recovering lithium and iron from used LFP type batteries (Method C) According to another aspect alternative to the abovementioned second aspect, the disclosure relates to a method for recovering lithium and iron from LFP-type batteries. The batteries may each comprise a rolled sheet comprising one or more layers including one or more metallic layers. Each metallic layer respectively may have a coating of a precursory element, the precursory element of the coating of at least one metallic layer being precursory ink containing LiFePO₄/C₍ₛ₎. Said method may comprise (e.g. for each battery) the steps of:
a.- Unrolling a sheet of a battery, the sheet comprising;
b.- Brushing each metallic layer for which the coating is precursory ink to separate the precursory ink for recovery of the substrate (S); and
c.-Treatment of the substrate (S) according to the process described above, whereby the lithium and the iron contained in the batteries of the LFP type are recovered.

Steps a and b (i.e. non-grinding extraction process) may be performed in a first stage for a number of batteries, so as to recover a quantity of substrate. Step c (i.e. chemical treatment process) may afterwards be performed on said quantity of substrate in a second stage.

This method will be described in greater detail later in the description.

### Process for recycling an electrode material containing LiFePO₄/C₍ₛ₎ for an LFP type battery (Method D)

According to yet another aspect, the disclosure relates to a process for recycling an electrode material containing LiFePO₄/C₍ₛ₎ for an LFP type battery, said process comprising the steps of:
- . Recovery of lithium and iron from used batteries of the LFP type according to methods (B) or (C) described above; and
- . Preparation of a new LiFePO₄/C₍ₛ₎ substrate from recovered iron and lithium.

According to yet another aspect, the disclosure relates to an electrode for an LFP battery characterized in that the LiFePO₄/C₍ₛ₎ material constituting it is recycled according to method (D) above.

According to yet another aspect, the invention relates to the use of lithium and iron recovered from used batteries of the LFP type according to method (D) for the manufacture of a new electrode material for an LFP battery.

### Use for leaching a substrate (S) containing LiFePO_{4/}C(ₛ)

According to yet another aspect, the disclosure relates to the use for the leaching of a substrate (S) containing LiFePO₄, of a solution, in particular aqueous, comprising:
- .an organic acid chosen from alkylsulfonic alkylarylsulfonic or arylsulfonic acids or ethylenediamine-N,N'-bis (2-hydroxyphenylacetic acid), or a mixture thereof, and
- optionally an oxidizing agent.

### Definitions

The term "approximately" means, within the meaning of the present description, that the value may vary by plus or minus 10%.

The term "alkyl" means, within the meaning of the present description, a saturated, linear or branched aliphatic chain comprising from 1 to 6 carbon atoms. By way of example, we can cite the radicals methyl, ethyl, n-propyl, etc.

The term "aryl" means, within the meaning of the present description, an aromatic radical having from 6 to 10 carbon atoms, preferably a phenyl radical (C₆H₅-).

The term "alkaryl" means, within the meaning of the present description, an aryl radical substituted by an alkyl radical, the terms "aryl" and "alkyl" being as defined above. An example of an alkylaryl radical is in particular the toluyl radical.

The terms "alkylsulfonic", "alkyarylsulfonic" or "arylsulfonic" acids designate, within the meaning of the present description, compounds of formula R-S(O₂)OH where R represents respectively an alkyl, alkylaryl or aryl radical, the latter being as defined above.

The designation (s) means, within the meaning of the present description, that the compound is in solid form.

### Items of the invention

The invention generally relates to the following items:
Item 1: A method for recovering lithium (Li) and iron (Fe) from a substrate (S) containing LiFePO₄/C₍ₛ₎, the method comprising the steps of:
   i.- Bringing the substrate (S) into contact with an aqueous leaching solution comprising an organic acid chosen from alkylsulfonic, alkylarylsulfonic, arylsulfonic acids, ethylenediamine-N,N'-bis(2-hydroxyphenylacetic acid) or a mixture thereof, and optionally an oxidizing agent, whereby a liquid phase L₁ rich in lithium and iron is recovered;
   ii.- Precipitation of iron in the liquid phase L₁ obtained in step i), and recovery of the iron precipitate;
   iii.- Precipitation of lithium in the L₂ liquid phase obtained in step ii) and recovery of the lithium precipitate; and optionally
   iv.- Recovery of the liquid phase L₃ obtained in step iii) and recovery of the acid or organic solvent used in step i).
Item 2: The method according to item 1, wherein at step ii), an FePO₄ precipitate is recovered.
Item 3: The method according to item 1 or 2, wherein at step iii), an Li₂CO₃ precipitate is recovered.
Item 4: The method according to any one of items 1 to 3, wherein step ii) comprises the addition of an ammonium hydroxide solution to the liquid phase L₁.
Item 5: The method according to item 4, wherein step ii) is carried out at a pH between 3 and 5.
Item 6: The method according to any one of items 1 to 5, wherein step iii) comprises the addition of an alkali metal carbonate or alkaline earth metal carbonate solution to the liquid phase L₂.
Item 7: The method according to item 6, wherein step iii) is carried out at a pH between 11 and 13.
Item 8: The method according to any one of items 1 to 7, wherein at step iv), the organic acid is recovered in liquid phase L₃ by distillation.
Item 9: The method according to any one of items 1 to 8, wherein the organic acid solvent is selected from methylsulfonic acid, paratoluenesulfonic acid, benzenesulfonic acid, ethylenediamine-N,N'-bis(2-hydroxyphenylacetic acid) or a mixture thereof.
Item 10: The method according to item 8 or 9, wherein the organic acid recovered is reused at step i).
Item 11: The method according to any one of items 1 to 10, wherein the substrate (S) further contains manganese (Mn).
Item 12: The method according to item 11, wherein the manganese is extracted from the liquid phase L₁ obtained in step i), according to an extraction step (E_{M}), prior to step ii).
Item 13: The method according to any one of items 1 to 12, wherein the substrate (S) further contains nickel, and/or cobalt.
Item 14: The method according to item 13, in which the nickel and/or the cobalt are extracted from the liquid phase L₁ obtained in step i), according to an extraction step (E_{NC}), prior to step ii).
Item 15: The method according to items 12 to 14, wherein, if necessary, the extraction step (E_{M}) is carried out before the extraction step (E_{NC}).
Item 16: The method according to any one of items 1 to 15, wherein the substrate (S) is derived from an electrode material from used batteries of the LFP type.
Item 17: A method for recycling LFP type batteries, said method comprising the steps of:
   a.- Crushing of LFP-type batteries;
   b.- Sieving the ground material obtained, whereby a fine fraction of substrate (S) containing LiFePO_{4/}C is recovered; and
   c.- Treatment of the substrate (S) according to any one of items 1 to 16, whereby the lithium and the iron contained in the LFP type batteries are recovered.
Item 18: A method for recycling a rolled sheet of a battery, the sheet comprising one or more layers including one or more metallic layers, each metallic layer respectively having a coating of a precursory element, the precursory element of the coating of at least one metallic layer being precursory ink thereby containing LiFePO₄/C₍ₛ₎, the method comprising:
   - unrolling the sheet;
   - brushing each metallic layer for which the coating is precursory ink to separate the precursory ink, thereby recovering a substrate (S) containing LiFePO₄/C₍ₛ₎; and
   - implementing the method according to any one of items 1 to 16 to recover lithium and iron from the substrate.
Item 19: The method according to item 18, wherein for at least one given metallic layer having a coating of precursory ink, the brushing of the at least one given metallic layer is performed under dry conditions.
Item 20: The method according to item 19, wherein the at least one given metallic layer having a coating of precursory ink is a layer of aluminum.
Item 21: The method according to any one of items 18 to 20, wherein the brushing of the at least one given metallic layer having a coating of precursory ink is performed under suction.
Item 22: The method according to item 21, wherein an air curtain system imposes a direction of evacuation of the precursory ink during the suction.
Item 23: The method according to any one of items 18 to 22, wherein for at least one other metallic layer, the precursory element of the coating of the other metallic layer is graphite, the method comprising separating the graphite by brushing the at least one other metallic layer and/or by immersing the at least one other metallic layer in a liquid.
Item 24: The method according to item 23, wherein the at least one other metallic layer having a coating of graphite is a layer of copper.
Item 25: The method according to item 23 or 24, wherein the method further comprises the generation of an ultrasound in the liquid during the separation of the graphite.
Item 26: The method according to any one of items 18 to 25, wherein the sheet comprises multiple layers, the method comprising:
   - separating the layers during the unrolling using suction.
Item 27: The method according to item 26, wherein the multiple layers comprise the one or more metallic layers and at least one plastic layer.
Item 28: The method according to any one of items 18 to 27, wherein the brushing of each metallic layer comprises brushing a top surface and/or a bottom surface of the one or more metallic layers.
Item 29: The method according to any one of items 18 to 28, wherein the brushing is performed by at least one brush comprising bristles.
Item 30: The method according to item 29, wherein the bristles comprise a polymer, a plastic and/or a metal.
Item 31: The method according to item 29 or 30, wherein the at least one brush has a diameter ranging from 10 mm to 500 mm, for example from 60 mm to 160 mm.
Item 32: The method according to any one of items 29 to 31, wherein the bristles have a diameter ranging from 0.1 mm to 5 mm, for example from 0.4 mm to 1.4 mm. Item 33: The method according to any one of items 29 to 32, wherein the at least one brush rotates, the brush rotating and the sheet advancing in a same direction and the brush rotating at a given speed, for example, a speed higher than 100 rpm and/or lower than 1000 rpm, or a speed ranging from 100 rpm to 1000 rpm.
Item 34: The method according to any one of items 29 to 33, wherein during the brushing, the brush applies an adjustable pressure to the sheet, the brush applying a pressure up to 100 kg, for example of up to more than 50 kg or up to 50 kg, and the pressure being adjustable in steps translating to a distance of the order of a millimeter or of a fraction of a millimeter, for example, by one tenth of a millimeter with a tolerance of +/- 10%.
Item 35: The method according to any one of items 18 to 34, wherein the method comprises providing a longitudinal casing enclosing the rolled sheet, the method comprising a step of cutting each extremity of the casing and removing the rolled sheet from the casing.
Item 36: The method according to any one of items 18 to 34, wherein the method comprises providing the rolled sheet on a spool.
Item 37: The method according to any of one of items 18 to 36, wherein the method comprises evaporating an electrolyte from the sheet.
Item 38: The method according to any one of items 18 to 37, wherein the method comprises collecting the precursory element after the brushing.
Item 39: The method according to any one of items 18 to 38, wherein the method comprises executing the method along a processing chain, for example in functional blocks.
Item 40: Use of lithium and iron recovered from used batteries of the LFP type according to the method of item 17 for the manufacture of a new electrode material for an LFP battery.
Item 41: Method for recycling an electrode material containing LiFePO₄/C(s) for an LFP type battery, said process comprising the steps of:
   - Recovery of lithium and iron from used battery electrode material of the LFP type according to the method of item 17; and
   - Implementation of recovered lithium and iron for the preparation of an electrode material containing LiFePO₄/C.
Item 42: Use for the leaching of a substrate (S) containing LiFePO₄, from a solution comprising:
   - an organic acid chosen from alkylsulfonic, alkylarylsulfonic or arylsulfonic acid, ethylenediamine-N,N'-bis (2-hydroxyphenylacetic acid) or a mixture thereof, and
   - optionally an oxidizing agent.

### Examples

The recycling of LFP batteries according to the method of the disclosure was carried out according to the following steps:
1.- Pre-treatment step: recovery of the black mass from used batteries or batteries discarded during their manufacture

The LFP battery is discharged to 0 volts, then disassembled (automatically or manually) to remove the plastic packaging and battery case and separate the cathode and anode electrodes. The materials of the cathode and the anode are then ground, and after sieving, a fine fraction of powdery materials is recovered, the particle size of which does not exceed 100 micrometers, and is ideally between 65 and 75 micrometers. This fine fraction constitutes the black mass.

Alternatively, for the pre-treatment step, the battery undergoes steps of unrolling a rolled sheet of the battery and brushing each metallic layer coated with precursory ink containing LiFePO₄/C(s) so as to separate said precursory ink.

### 2.- Leaching Step :

After recovery, the black mass is dissolved at a concentration of between 40 to 100 g/L in an organic acid as defined in the present application which has a concentration of between 3 to 5 M, in aqueous solution. 6 to 24% (v/v) of hydrogen peroxide H₂O₂ are then added to the acid solution obtained. Hydrogen peroxide plays, in this step, the role of an oxidizing agent which optimizes the extraction of lithium and iron from the black mass. This reaction takes place at room temperature and with agitation for 90 minutes.

After these 90 minutes, vacuum filtration is performed to separate the leaching liquid from impurities (graphite (carbon), aluminium, copper and polymers).

### 3.- Extraction of Metals:

In the case of an SLFP (Nickel, Cobalt + LiFePO₄) or LMFP (Manganese + LiFePO₄) battery, after vacuum filtration, solvent extraction is carried out before the 2 precipitation steps ii) and iii) as described in this application. This extraction step is of course not necessary in the case of a classic LFP battery (LiFePO4), we go directly to the 2 precipitation steps after vacuum filtration.

For manganese recovery, di-(2-ethylhexyl)phosphoric acid is used as extraction solvent, as described in the literature (see in particular Tsakiridis, P. E., and S. Agatzini-Leonardou. "Process for the recovery of cobalt and nickel in the presence of magnesium from sulphate solutions by Cyanex 272 and Cyanex 302." Minerals Engineering 17.7-8 (2004): 913-923 ). As an alternative solvent, N,N,N',N'-Tetraoctyl Diglycolamide (TODGA) can be used.

For the recovery of cobalt and nickel, Cyanex 272 or Cyanex 301 extraction solvents are used. As an alternative solution making it possible to separate the cobalt and the nickel, the method consisting in separating the cobalt by means of a phosphonium-based ionic liquid can be used (see in particular on this subject Onghena, Bieke, et al. "Cobalt (II )/nickel (II) separation from sulfate media by solvent extraction with an undiluted quaternary phosphonium ionic liquid." RSC advances 7.57 (2017): 35992-35999.

The nickel in the residual extraction liquor is separated from the lithium using a "Deep Eutectic Sovent" (DES) composed of carboxylic acids and lidocaine, as proposed by Van Osch et al. (Van Osch, Dannie JGP, et al. "Removal of alkali and transition metal ions from water with hydrophobic deep eutectic solvents." Chemical Communications 52.80 (2016): 11987-11990).

After the recovery of manganese, cobalt, and nickel, we go to the 2 precipitation stages, we first recover the iron and the phosphate in the form of FePO₄×H₂O by adding ammonium hydroxide NH₄OH and H₂O₂ in the leached solution to ensure the oxidation of Fe²⁺ (if present in the solution) to Fe³⁺. In this step H₂O₂ acts as an oxidizing agent. Then, we pass to the precipitation of Lithium in the form of lithium carbonate Li₂CO₃ by adding Na₂CO₃ and NaOH which ensures the adjustment of the pH.

### 4.- Recovery of Organic Acids

After recovery of lithium and iron, the organic acid used in the black mass leaching stage, the organic acid can be recovered by several processes: vacuum distillation, electrolytic extraction, or by diffusion dialysis (membrane separation).

### Non-grinding extraction process of Method C

The features of the method according to that of Method C will now be described in greater detail. The method may comprise recycling a rolled sheet of a battery. The sheet may comprise one or more layers including one or more metallic layers. Each metallic layer respectively may have a coating of a precursory element. The precursory element of the coating of at least one metallic layer may be precursory ink. The method may comprise unrolling the sheet and brushing each metallic layer for which the coating is precursory ink to separate the respective precursory ink for recovery of the substrate (S).

Such a non-grinding extraction process forms an improved solution for recovering precursory ink of a rolled sheet of a battery so as to recycle such type of battery.

Method C may be implemented with an adapted system. The system comprises an unrolling unit to perform the unrolling of the sheet, and at least one brush to perform the brushing of the metallic layer(s) for which the coating is precursory ink. The system may optionally comprise a unit for performing the recovery of lithium (Li) and iron (Fe) from a substrate (S) containing LiFePO_{4/}C(s). The unit may be configured to i) bring the substrate (S) into contact with an aqueous leaching solution comprising an oxidizing agent and an organic acid chosen from alkylsulfonic, alkylarylsulfonic, arylsulfonic acids, ethylenediamine-N,N'-bis(2-hydroxyphenylacetic acid) or a mixture thereof, whereby a liquid phase L₁ rich in lithium and iron is recovered. Additionally or alternatively, the unit may be configured
to ii) perform the precipitation of iron in the liquid phase L1 obtained in step i), and recovery of the iron precipitate. Additionally or alternatively, the unit may be configured to iii) perform the precipitation of lithium in the L₂ liquid phase obtained in step ii) and recovery of the lithium precipitate. Additionally or alternatively, the unit may optionally be configured to iv) recover the liquid phase L₃ obtained in step iii) and to recover the acid or organic solvent used in step i). The unit may be modular and operable with other units of the system.

By undergoing a phase of brushing, the precursory ink can be effectively removed from the metallic layer while limiting a wearing of the metallic material itself, thereby enabling a selective separating of the precursory ink from the sheet. In other words, the method enables obtaining the precursory element at a relatively high level of purity without having to filter it out of a ground mixture. Unrolling the battery sheet prior to brushing also allows for easy access to the coating of the precursory ink. In addition, the procedure of unrolling the sheet itself counts for a nondestructive means for preparing the materials of the sheet for their separation.

Such a procedure consequently results in a recovered precursory ink (and optionally, of a different precursory element) of a more favorable quality. In fact, the method may enable the recovery of the precursory ink, from a battery that is as pure as possible. A method of such selective deconditioning of a desired battery scrap (for example, LFP cylindrical battery cells) can contribute to achieving a recyclability level greater than 90%. The method therefore also provides an alternative to steps of grinding and processing a mixture to filter out substances of interest. The action of unrolling the sheet prepares the materials of the sheet for separation in a simplified manner while maintaining the homogeneity of each material. The action of brushing each metallic layer for which the coating is precursory ink to separate the respective precursory element results in a separated precursory ink of improved quality. The precursory ink may be recovered in such a manner so as to be of an optimal quality for undergoing the subsequent chemical treatment. Moreover, the separation by brushing also improves the condition of each metallic layer for recycling, as the brushing provides minimal damage or deformation to the metallic layer. The method therefore allows for the recycling of all materials of the brushing process.

The method C is one for recycling a rolled sheet of a battery. The battery may comprise a single or several metallic layers. The battery may or may not comprise one or more non-metallic layers. By "recycling" it is meant that the method participates in recovering one or more elements of the battery, such as at least one (e.g., each) precursory element of the battery, and optionally further the metal of at least one (e.g., each) metallic layer. The battery may be one that has been manufactured but has not been used for its intended purpose, i.e. a battery that is a production waste product, or not entirely used. Alternatively, the battery may be one that has been used for its intended purpose, i.e. a battery that has been mostly or entirely used. In other words, whatever the reason for the end of life for the battery, the recycling may follow as a next step. The recycling enables the salvaging of materials from e.g. batteries that are sent directly from production to scrap, a portion which can be as high as 10 to 12% of total batteries manufactured. The method may comprise recycling a rolled sheet of a battery that has been removed from a battery casing. Alternatively, the method may comprise recycling a rolled sheet of a battery that has not been placed inside a battery casing. For example, the method may comprise recycling a rolled sheet of a battery directly after its production (e.g. the sheet being rolled on an industrial spool).

The battery may be an LFP battery. The battery may be a super LFP battery. The battery may be a dry-cell battery. The battery may be a wet-cell battery. The rolled sheet may comprise at least one layer of components used to form the battery electrodes. The rolled sheet may be made of a sheet in a form that is folded in a curved manner or that is curled up. The rolled sheet may be rolled around a longitudinal support element (that may or may not be part of the battery, e.g., the support element may be withdrawn and discarded during fabrication, or alternatively stay in place). The longitudinal support element may be of a cylindrical shape or of a prismatic shape. The rolled sheet may be of a cylindrical shape. Alternatively, the rolled sheet may be of a non-cylindrical shape. The rolled sheet may be of a prismatic shape. The rolled sheet may have a diameter ranging from 3 cm to 8 cm, for example from 5 to 6 cm. The rolled sheet may have a length (i.e. when unrolled, a width) less than or equal to 21 cm, or alternatively greater than or equal to 21 cm. Alternatively, the rolled sheet may be from an industrial spool.

The sheet may comprise one or more layers, including at least one metallic layer. The sheet may comprise a single metallic layer (i.e., the at least one metallic layer consists of a single metallic layer), or alternatively the sheet may comprise several metallic layers (i.e., the at least one metallic layer consists of a plurality of metallic layers). At least one (e.g., each) metallic layer may be a fine and fragile layer, forming the anode or cathode of a battery. At least one (e.g., each) metallic layer may be an aluminum layer. The at least one (e.g., each) metallic layer may be a copper layer. The rolled sheet may comprise at least one aluminum layer and at least one copper layer. The sheet may comprise exactly two metallic layers, one layer forming the anode (e.g. in copper and/or coated with graphite) and one layer forming the cathode (e.g. in aluminum and/or coated with precursory ink). The one or more layers may further comprise at least one plastic layer. The plastic layer may separate each metallic layer. The one or more layers may comprise at least one layer (e.g., each) impregnated with an electrolyte. Each metallic layer respectively may comprise a coating of a precursory element. The precursory element is one that participates in a chemical reaction with another material of the rolled sheet. The at least one metallic layer may comprise one or more first metallic layers (also referred to as "at least one 'given' layer having a coating"). The precursory element which coats at least one (e.g. each) first metallic layer may be precursory ink. The at least one metallic layer may comprise one or more second metallic layers (also referred to as "at least one 'other' layer having a coating"). The precursory element which coats at least one (e.g. each) second metallic layer may be graphite.

The precursory ink refers to a coating of precursory element on the cathode of a battery. The ink comprises active cathodic materials of electrodes, such as, for example, at least one of iron, nickel, lithium, graphite, cobalt, and/or manganese. The ink may resemble a fine powder when separated from the metallic layer (i.e. upon the action of brushing). The ink may be contaminated with the material of the metallic layer upon which it is coated.

The unrolling of the sheet may comprise unrolling or unfurling the sheet into a flat form, or in other words into a horizontal or planar form. The unrolling enables the providing of a surface that exposes up to the entire surface area of the sheet, i.e. one that displays a more optimal area of the coating than when the sheet remains in its rolled form. In other words, the unrolling can present a maximum portion of the coating of the precursory element of the metallic layer that is intended for separation. The unrolling may comprise unfolding the sheet in a manner so as to minimize creases or crinkles appearing in the sheet as it is brought into its planar form. When unrolled, the sheet may for example have a total length ranging from 3 m to 15 m, for example from 5 m to 11 m. Alternatively, if the rolled sheet is from an industrial spool, it may have a total length ranging up to at least 100 m. Dedicated demounting units may be used to unroll the sheet.

The method may comprise brushing each metallic layer for which the coating is precursory ink to separate the respective precursory ink. The method may comprise brushing at least one metallic layer to separate a different precursory element from the at least one layer. The brushing may comprise an action of sweeping or a light scraping. Such action may be light enough so as not to damage or break the metallic layer with which it comes in contact, but firm enough to separate the respective precursory element. The brushing may be implemented by one or more brushes. At least one (e.g., each) of the one or more brushes may comprise bristles. The bristles may comprise a polymer, a plastic and/or a metal, for example iron and/or nylon 11, such as RILSAN. The at least one brush may have a diameter ranging from 10 mm to 500 mm, for example, from 60 mm to 160 mm, or from 90 mm to 130 mm, or at 110 mm with a tolerance of +/- 10%. The bristles may have a diameter ranging from 0.1 mm to 5 mm, or from 0.4 mm to 1.4 mm, or from 0.6 mm to 1.2 mm, or from 0.8 mm to 1 mm. At least one (e.g., each) of the one or more brushes may rotate, for example at a speed higher than 100 rpm and/or lower than 1000 rpm, or a speed ranging from 100 rpm to 1000 rpm. The speed of the brush(es) may be adjusted as a function of brush characteristics or specifications (e.g. type of brush, brush diameter, support forces) so as to allow optimal removal of the precursory element while maintaining the integrity of the metallic layer across its length. The brush(es) may apply a pressure to the sheet during the brushing ranging up to 100 kg, for example of up to more than 50 kg or up to 50 kg, that is adjustable in steps translating to a distance of the order of a millimeter or of a fraction of a millimeter, for example, by one tenth of a millimeter with a tolerance of +/-10%.

Each of the actions of unrolling the sheet and brushing each metallic layer not only enable optimal recovery of the precursory element (i.e. the recovered precursory element is of a high purity level), but also streamline the recovery process. In other words, the action of unrolling the sheet allows for an optimized arrangement of the sheet, and subsequently the at least one metallic layer, exposing the precursory element prior to brushing. The brushing itself allows for a recovery of a precursory element of a high quality as the action minimizes contamination from other materials, such as for example, that of the metallic layer itself. These actions can therefore also streamline the recovery process as the dissolution of the precursory element can be easier upon entry into subsequent chemical processing. Furthermore, the streamlining and obtaining of a precursory element of an improved quality allows resource savings and reuse of the separated materials.

Additional aspects of the method are now briefly discussed. When reference is made to a tool to perform a certain step of the method, it is understood that a system may also comprise such a tool, or alternatively perform in cooperation with such a tool or another system comprising such a tool.

The method may comprise unrolling and separating layers of the rolled sheet one by one and processing each layer after it is separated. In other words, when each layer is separated from the sheet, it may travel to the appropriate processing unit (later also referred to as "functional blocks") for further treatment. This may comprise separating each layer and then separately processing each layer one by one (i.e. consecutively at different designated processing units). Alternatively, this may comprise separating each layer and, once separated, processing them simultaneously at their respective designated processing units.

A demounting unit (may also be referred to as a line entry system) such as, for example, a unit comprising rollers forming a conveyor (i.e. may also be referred to as a roller conveyor), may perform the unrolling of the sheet. Unrolling the sheet by means of rollers enables a stable unrolling of the sheet at a controlled speed, each roller being set in motion and regulated at all times. If the sheet is wet (for example, comprises a wet electrolyte), a pneumatic drying system may evaporate any liquid (for example, any remaining liquid from an initial volume present in the battery casing - e.g. 200 mL- that has not naturally evaporated upon removal of the casing) from the sheet to ensure dry conditions. A ventilation system may evacuate any vapors being evaporated from the sheet. The evaporating may take place before brushing begins, so as to allow for an exposed first metallic layer with a dry surface that allows for optimal brushing. The unrolling may expose a surface of the metallic layer for brushing. The sheet may comprise multiple layers. The method may comprise separating at least two of the layers during the unrolling and/or using suction. The separating of layers may occur after the unrolling and prior to the brushing and/or separation of the precursory element. One of the at least two layers may for example be a plastic layer and another may be a metallic layer. A guide system for separating the multiple layers of the sheet during the unrolling and/or during suction may separate the at least two layers. The brushing of each metallic layer may comprise brushing a top surface and/or a bottom surface of the at least one metallic layer. In other words, the method may comprise brushing a top surface of each metallic layer to separate the respective precursory element and/or may comprise brushing a bottom surface of each metallic layer to separate the respective precursory element. The brushing may occur simultaneously on corresponding top an bottom surfaces of the layer (for example, at least one roller brush brushes a top surface of the layer at a given location along the length of the layer while at least one roller brush brushes the bottom surface of the layer at that same location).

A switch system may be used to turn the layer to reveal the desired top or bottom surface towards the brushes for the brushing. The switch system may comprising rollers, and may for example be a baffle conveyor. Such a system enables, for example, brushing a top surface of the layer before turning the layer and brushing a bottom surface, or vice versa. At least one first portion of the layer may undergo brushing on its top surface while at least one different portion of the layer (i.e. at a distance along the length of the layer from the at least one first portion) may undergo brushing on its bottom surface. In other words, a portion of the top surface of the layer may undergo brushing while a portion of the bottom surface of the layer undergoes brushing at a different position along the length of the layer. Consequently, an optimal quantity of precursory element can be recovered from each metallic layer. The brushing may occur on the exposed surface(s) of the metallic layer as the layer advances under the brushes by use of the conveyor. The sheet (and/or, its respective layers) may advance through the whole system by use of at least one conveyor. The brush(es) may be positioned along the conveyor and may turn in the same direction as that of the conveyor, i.e. of the advancing layer. The brushes may be in the form of rollers, the conveyor being a roller conveyor. The layer may consequently pass along the conveyor and under (and/or over) the brushes in a natural manner until it exits the brushing phase, for example, via the conveyor. The brushing of the at least one first metallic layer (e.g. each) may comprise brushing a top surface and/or a bottom surface of the layer. The brushing of the at least one first metallic layer (e.g. each) having a coating of a precursory element (e.g. precursory ink) may be performed under suction.

A suction unit may provide suction to the at least one first metallic layer having a coating of precursory element during the brushing. The method may or may not comprise use of an air curtain system. The air curtain system may impose a direction of evacuation of the precursory element during the suction. When the brushing separates a volume of precursory element from the sheet, the air curtain system may impose an evacuation flow on the precursory element and transport it to the suction unit (for example, a suction hood) to collect the precursory element particles loose in the air away from the zone of brushing. As the particles of the precursory element may be very fine (e.g. precursory ink), the suction may be sufficiently intense so as to successfully extract a maximum quantity if particles. The air curtain may also enable the prevention of deposits of the precursory element from forming and in preventing particles of the precursory element from fouling or clogging up components of the system.

The method may comprise storing the respective precursory element after the brushing. For example, the suction unit may pneumatically transport the precursory element to a recovery system, such as to a cyclo-filter having a storage capacity. The suction unit may remove air containing the precursory element (precursory ink) at a rate ranging from 10,000 Nm³/h to 14,000 Nm³/h, for example 12,000 Nm³/h.

The coating of a precursory element of the at least one metallic layer may be, for at least one first metallic layer, a coating of precursory ink, the brushing of the at least one first metallic layer being performed under dry conditions. The at least one first metallic layer having a coating of precursory ink may be a layer of aluminum.

The coating of a precursory element of the at least one metallic layer may be, for at least one second metallic layer, a coating of graphite. The separation of the precursory element may occur during immersion in a liquid. The brushing of the at least one second metallic layer may occur during immersion in a liquid. The brushing may comprise brushing a top surface and/or a bottom surface of the at least one second metallic layer (e.g. each). The at least one second metallic layer having a coating of graphite may be a layer of copper. In such a case, for the step of brushing, an immersion bath or other washing/cleaning device may immerse the sheet in a liquid during the brushing of the at least one second metallic layer having a coating of a precursory element. The immersion bath or washing/cleaning device may, for example, be a water tank, or a tank containing any other dissolving liquid. One or more brushes may brush the precursory element on the metallic layer in the immersion bath as the layer advances in a certain direction. The immersion bath may or may not comprise an ultrasound unit for generating an ultrasound in the liquid during the separation (the separating optionally comprising brushing the layer) of the at least one second metallic layer (graphite). Alternatively, the immersion bath or washing/cleaning device may comprise an ultrasound unit for generating an ultrasound in the liquid before the brushing of the at least one second metallic layer. Emitting an ultrasound to the layer enables a vibration of the precursory element that consequently assists in its separation from the metallic layer during brushing.

The method may comprise providing a longitudinal casing enclosing the rolled sheet to a cutting tool. The method may comprise a step of cutting each extremity of the casing and removing the rolled sheet from the casing. The method may comprise using the cutting tool to cut each extremity of the longitudinal casing enclosing the rolled sheet and a recovery crate for retrieving the longitudinal casing after cutting. the inner core of the battery may also fall away from the rolled sheet for collection and further processing upon complete unrolling of the sheet. The method can therefore allow for the recycling of all components of the battery.

Additionally or alternatively, the method may comprise providing the rolled sheet on a spool to the conveyor. In this case, the rolled sheet may be a sheet of, for example aluminum with a coating of precursory ink or copper with a coating of graphite. The method may be implemented along a processing line. The processing line may for example comprise functional blocks. The system through which the method is implemented may be a partially or fully automatic system. The system may be a modular system, for which different blocks or units can be repositioned or reassigned so as to allow for a scalable system.

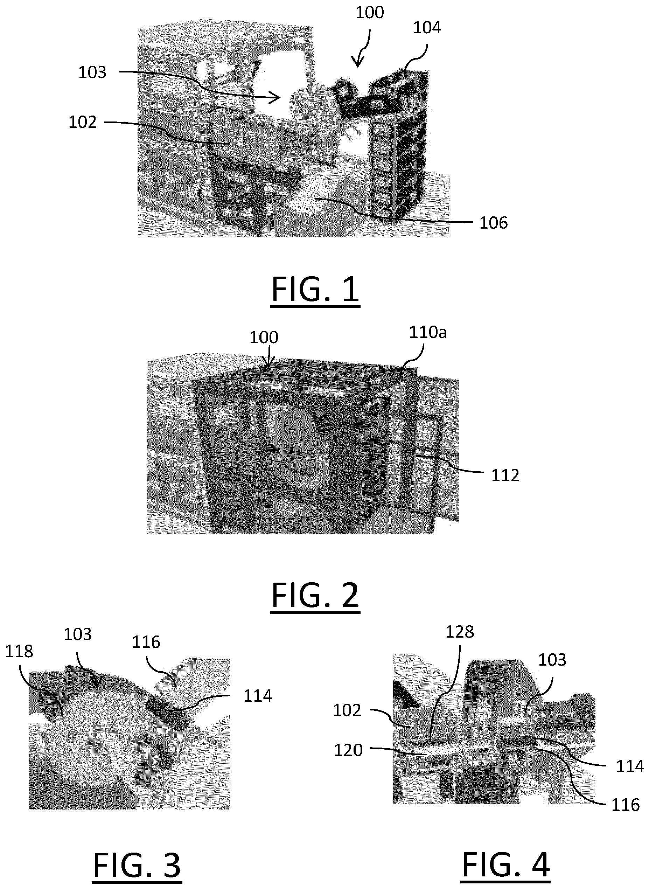

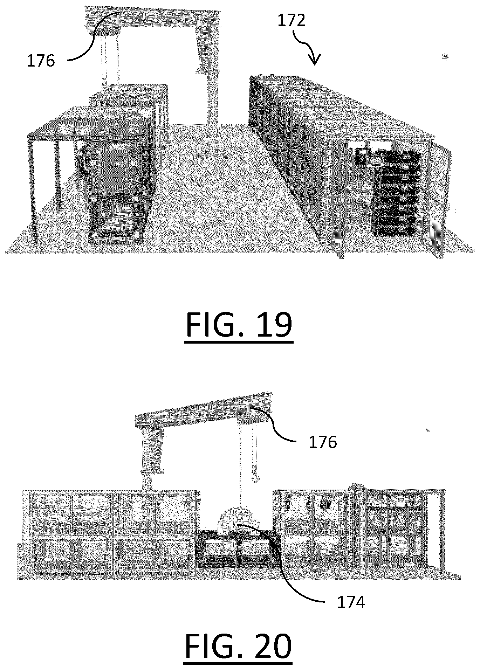

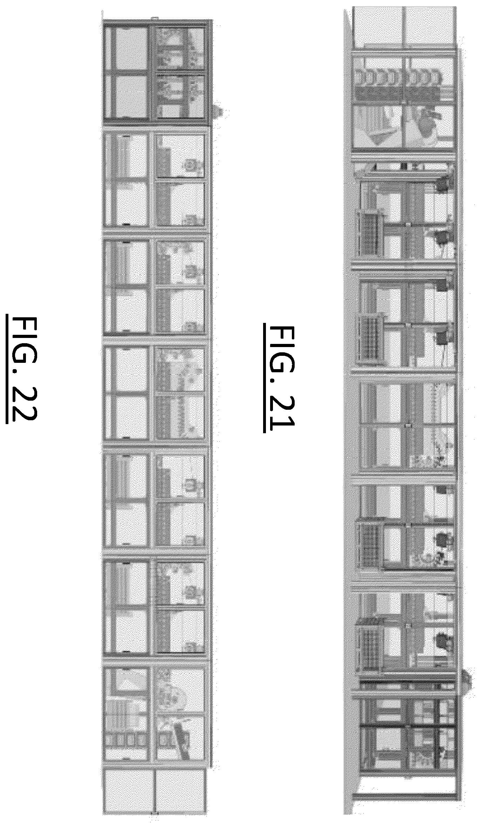

FIG. 1 to FIG. 22 illustrate examples of the method and system. A processing chain may implement each step of the method. The processing chain may comprise dedicated functional blocks or units that may execute each step of the method, such as for example. The functional blocks or units may connect to one another as a modular system so as to form the processing chain.

FIG.s 1 to 4 show examples of providing a longitudinal casing to a cutting tool and conveyor according to the method.

As illustrated in FIG. 1, a unit for loading 100 may provide a longitudinal casing comprising a rolled sheet to a cutting tool 103 (enclosed, for example, within a cutting container) and conveyor 102 (for example, a linear conveyor). Loading boxes 104 may store the longitudinal casings in batches, for example, in batches of 10. The processing time for each batch may provide an operator with a period of time during which he or she can look after other processing needs.

As can also be seen in FIG. 3 and FIG. 4, when it is time for a new casing 114 to be fed to the system, the loading box 104 may provide the casing 114 to the receptacle 116 of the cutting tool 103. The loading boxes 104 may be at an angle or inclination sufficiently large enough so that it can supply the longitudinal casing 114 to the conveyor by gravity, and at a desired pace. The cutting tool 103 may comprise two rotating serrated blades 118. The choice of blades 118 and the speed of the cutting tool 103 may be selected for obtaining a clean cut. The tool 103 may cut both ends of the longitudinal casing 114 simultaneously. A pusher (not shown) may push the rolled sheet from the longitudinal casing 114 once the ends have been cut. The case 114, as well as the battery core and/or any electrolyte present (not shown), may fall away from the rolled sheet as a result into a collecting crate 106 (see FIG. 1) positioned below the cutting tool 103.

The loading unit 100 may be surrounded by an enclosure 110a, as displayed in FIG. 2, as a safety protection against the cutting tool 103 and the entrance to the conveyor 102. The enclosure 110a may comprise an opening such as a hatch or door 112 at the back to allow for the supply of loading boxes 104 as necessary and to enable access to the cutting tool 103, conveyor 102 and collecting crates 106 for maintenance, and/or access to the rolled sheet in case of malfunction as it starts along the conveyor 102. The loading unit may be a modular unit so that its location within the system may be changed depending on the desired application.

Upon completion of cutting, and as displayed in the example illustrated in FIG. 4, the receptacle 116 of the cutting tool 103 may transfer the inner part of the casing 114, i.e. the rolled sheet 120, to the conveyor 102 for unrolling. The conveyor 102 may comprise rollers 128. The unrolling may be automatic. The loading unit 100 may also comprise an additional cutting tool 103, such as a scalpel (not shown), for the clean removal of a protective insulation as the rolled sheet 120 transfers from the loading box 104 to the conveyor 102. As displayed in FIG. 4, the rolled sheet 120 may move laterally from the receptacle 116 of the of the cutting tool 103 to the conveyor 102 upon removal of the casing 114 and insulation (not shown).

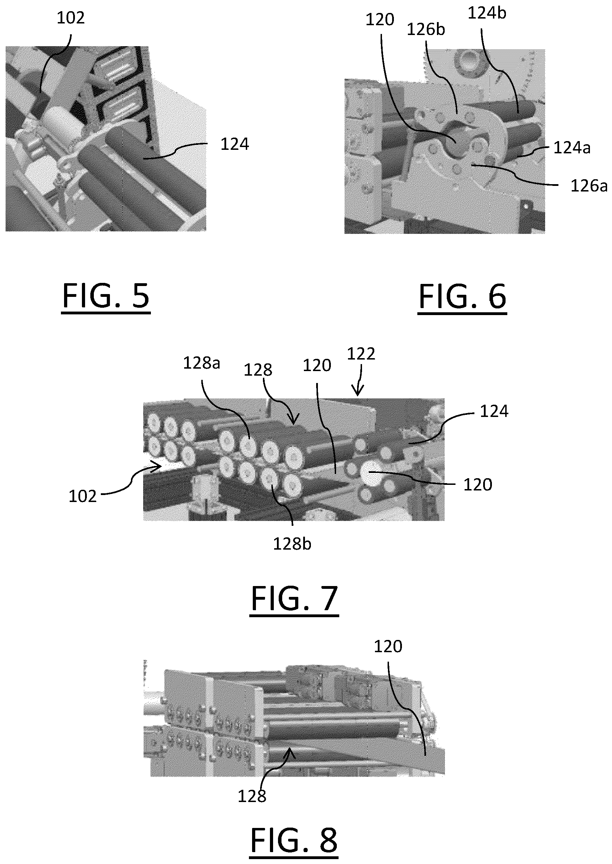

FIG. 5 to FIG. 8 display illustrations of an example of an unrolling unit 122, comprising five unrolling initiation rollers 124 surrounding the rolled sheet 120 for unrolling initiation. The unrolling unit may also be a modular unit so that its location within the system may be changed depending on the desired application. The group of five rollers 124 may consist of three motorized lower rollers 124a on a fixed base 126a and two motorized upper rollers Is 124b on a mobile base 126b. The mobile base may compress the rolled sheet 120 between the fixed base 126a and the mobile base 126b so as to drive the sheet 120 into rotation. The rotation may therefore cause a lead section of the sheet 120 to catch in the rollers 128, the rollers 128 pinning the sheet 120, and therefore triggering unrolling of the sheet 120 and its different layers. Once the unrolling starts, the sheet 120 may continue to unroll across the length of the conveyor 102. The sheet 120 may be "sandwiched" between an alignment of upper rollers 128a and lower rollers 128b so as to guide the entire length of the sheet 120 (for example, 11m of sheet 120) throughout the system. Once the sheet 120 starts to unroll, the initiation rollers 124 may release the sheet 120 to allow it to unroll to the induced rhythm of the conveyor 102. In other words, once enough of the sheet 120 is travelling across the conveyor 102, the surrounding rollers 124 can release the sheet 120 enabling the sheet 120 itself to therefore control the speed and allowing freedom of rotation of the rollers 128, without need for further use of the two motorized rollers 124b.

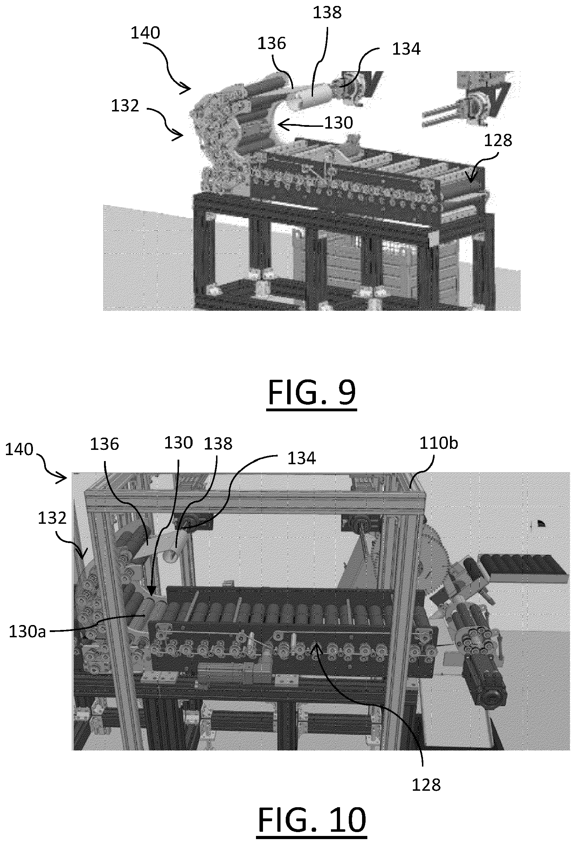

As displayed in FIG. 7, the rollers 128 may comprise two doubles sets of four rollers, all rollers 128 being motorized and turning at the same speed. As can be seen in the examples illustrated in FIG. 7 and FIG. 8, the sheet 120 may be smoothened by the rollers 128 as it progresses through the system. Such smoothening may be useful after unrolling and prior to brushing. As shown in the example of FIG. 10, the conveyor 102 may comprise an alignment of upper and lower motorized rollers 128. All rollers 128 may be synchronized so as to efficiently control the tension across the sheet 120 as it moves along the conveyor 102.

The method may also comprise evaporating any vapors, such as any remaining electrolyte, from the sheet 120 through a pneumatic drying system (not shown) installed throughout the length of the conveyor 102, i.e. from entry of the rolled sheet 120 to the conveyor 102 via the receptacle 116 of the cutting tool 103 to the last step of the method (for example, collection of separated materials after brushing). The pneumatic drying system may direct air toward a ventilation system which may ventilate air comprising, for example, electrolyte vapor condensation at a rate ranging from 18,000 Nm³/h and 22,000 Nm³/h, for example 20,000 Nm³/h. Before brushing, the sheet may undergo a step of separating of layers. This may involve the separation of a plastic layer and a metallic layer. As identified in FIG. 9 and FIG. 10, a diverter unit 140 may comprise a number of diverter rollers 130 comprising top diverter rollers 130a and bottom diverter rollers (not shown) to recover a plastic layer 136 of the sheet 120 and exit the layer from the processing flow. The diverter rollers 130 may be in the form of cages with, for example, a rubber surface. As the sheet moves between the top diverter rollers 130a and bottom diverter rollers, air may pass through the diverter rollers 130 (i.e. from the outside to the inside of the diverter rollers 130) so as to provide suction to the top and bottom surfaces of the sheet 120. The strength of the suction may be high enough so as to initiate a routing of the plastic layer 136 until it is caught by chicane rollers 132 forming a bend. The process may also comprise an action of blowing so as to force the layers, that are not desired to be pulled, to remain horizontal. The plastic layer 136 may peel away from a metallic layer of the sheet 120 for long enough so that the entire layer can deflect from the path of the metallic layer and the other remaining layers of the sheet 120. The plastic layer 136 itself may be a porous membrane. It may be a layer of, for example, polyethylene or polypropylene. The layer may have a thickness ranging from 6 to 25 microns, or for example from 9 to 20 microns.

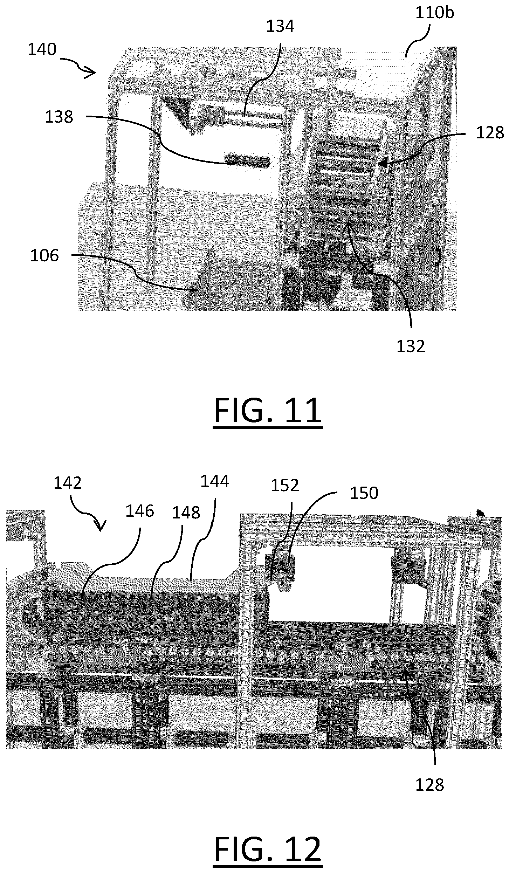

At the end of the bend, a rotating clamp 134 may recover the incoming layer of plastic 136. Once the clamp 134 receives the layer 136, it may close to hold or "pinch" the layer 136, and may start rotating so as to begin rolling the layer 136 into a roll 138 for collection. As the clamp 134 may move with a rotational motor, the layer 136 may move freely (i.e. unconstrainedly) upon pinching. After recovery of the entire length of the layer 136, the clamp 134 may perform a backward translation (i.e. may remove the clamp from the rolled plastic layer as opposed to removing the rolled plastic layer from the clamp), as illustrated in FIG. 11, so as to allow the roll 138 of plastic layer 136 to fall into a recovery crate 106 for post-processing. Additionally or alternatively, the method may apply additional diverter rollers 130 to provide further support for pinning the remaining layers of the sheet 120 along the original path of the conveyor 102. Like the unrolling unit 100, the diverter unit 140 may comprise an enclosure 110b for safety reasons. The diverter unit 140 may also be a modular unit so that its location within the system may be changed depending on the desired application. As can be seen in FIG.s 12 and 13, the sheet may continue along the conveyor 102 to an immersion brushing unit 142. Alternatively, the sheet may continue to an immersion unit (i.e. an immersion unit without brushing without brushing) (not shown in figures). In such a case, the sheet may optionally pass through two vertically aligned rows of (non-brush) rollers which may enhance removal of the precursory element by friction. Removal of the plastic layer may expose a metallic layer of copper (also referred to hereafter in this example as the second metallic layer), comprising a precursory element coating of graphite. The pneumatic drying system may continue to evaporate any wet substances newly exposed by removal of the previous layer. Before entry into a conveyor brushing unit 142, the sheet 120 may undergo a step of separating the exposed metallic layer of copper from another plastic layer underneath. Diverter rollers carry out this operation according to the same steps described in relation to FIG.s 9 and 10. The remaining layers of the sheet 120 may meanwhile continue on to a next stage of the method. The conveyor may then present the layer to an immersion brushing unit 142 of a similar principle to that of the diverter unit 140 for removal of the plastic layer 136. The layer may enter an immersion bath 144 containing a liquid via another conveyor 146, i.e. a conveyor 146 different to that of the conveyor 102. The other conveyor 146 may be a nonlinear conveyor 146. The other conveyor 146 may advance the layer through the immersion bath 144. The immersion brushing unit 142 may also be a modular unit so that its location within the system may be changed depending on the desired application. The immersion bath 144 may be configured to separate the precursory element (e.g. graphite) from the layer by submersion of the layer in the liquid and/or by brushing the layer in the liquid.

Brushes 148 may be positioned along the other conveyor 146 in the form of rollers (also referred to as conveyor roller brushes 148) for separating (or "unsticking") the precursory element (in this example, the precursory element being graphite) from both sides of the second metallic layer 152 for recovery. In other words, the conveyor roller brushes 148 may brush the metallic layer 152 to separate the graphite while at the same time, the direction of rotation of the brushes 148 convey the layer in a given direction. The brushes may comprise bristles (not shown in FIG.s 12, 13, nor 15 to 18). The brushes 148 may perform the brushing simultaneously on both top and bottom surfaces of the metallic layer 152 while the metallic layer 152 is immersed in the liquid. The brushes 148 may brush the precursory element (graphite) from the metallic layer 152 with enough force so as to separate the precursory element but without applying too much force so as to damage the metallic layer 152.

The immersion bath may be an ultrasonic bath, or may comprise an ultrasonic unit, such as for example ultrasonic transducers. The ultrasonic bath or ultrasonic unit may generate the ultrasound in the liquid while the brushing is ongoing. Additionally or alternatively, the ultrasonic bath or ultrasonic unit may generate the ultrasound in the liquid while no brushing is occurring, i.e. before brushing has started or after brushing has finished.

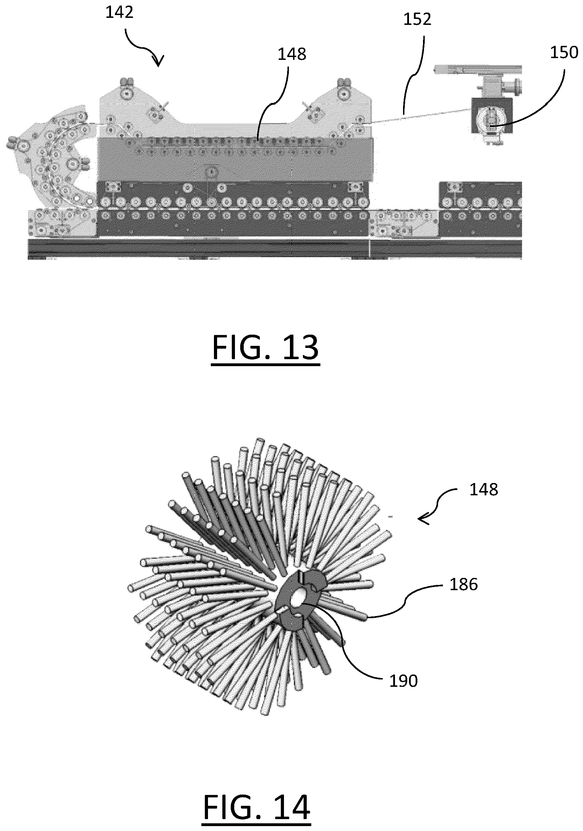

The example in FIG. 14 illustrates a possible form of a brush 148 (i.e. a roller conveyor brush, the brushes in this example being in the form of rollers). The brushes may be arranged in rows. The brushes of each row may be positioned side by side so as to form one larger brush. The row of brushes may, for example, comprise multiple brushes side by side so as form a length that is equal to the breadth of the sheet 120. The brushes of the same row may be the same type of brush. The brushes of the different rows may all be the same type of brush. As seen in FIG. 14, the brushes 148 may comprise bristles 186. The bristles may comprise a polymer, a plastic and/or a metal. The brush 148 may comprise a core or central axis 190, which may be used as a base structure upon which the bristles 186 are attached. The central axis 190 may also be the component of the brush 148 via which it is connected to the conveyor 146, through which the rotational movement of the brush can be operated. The brushes may have a diameter of 110 mm with a tolerance of +/- 10%. The bristles may have a diameter ranging from 0.8 mm to 1 mm. The brushes 148 may rotate during the brushing. The brushes 148 may rotate at a given speed, ranging for example from 100 rpm to 1000 rpm. The brushes 148 may rotate in the same direction as the advancing sheet.

The water may flow within a closed circuit, and a decanter may recover the precursory element (graphite) (not shown). The element (graphite) may then undergo steps of filtering and drying (not shown). After becoming free from the precursory coating (graphite), a rotary gripper system 150 may deposit the second metallic layer 152 (copper) in a storage box for post treatment.

The sheet 120 may meanwhile continue to a new diverter unit (i.e. as described in relation to FIG.s 9 and 10) for layer removal for separation of a newly exposed plastic layer and a first metallic layer. Removal of the plastic layer in this iteration may expose a first metallic layer of aluminum with a coating of a precursory element of precursory ink. The sheet 120 originally comprising multiple layers, this first metallic layer may be the only remaining layer of the sheet 120. The sheet may travel to a dry brushing unit 154. The dry brushing unit 154 may also be a modular unit so that its location within the system may be changed depending on the desired application.

This step of brushing may be the last procedure of the method before implementation of any post-processing to the recovered materials. Again, the pneumatic drying system may continue to evaporate any wet substances newly exposed by removal of the previous layer.

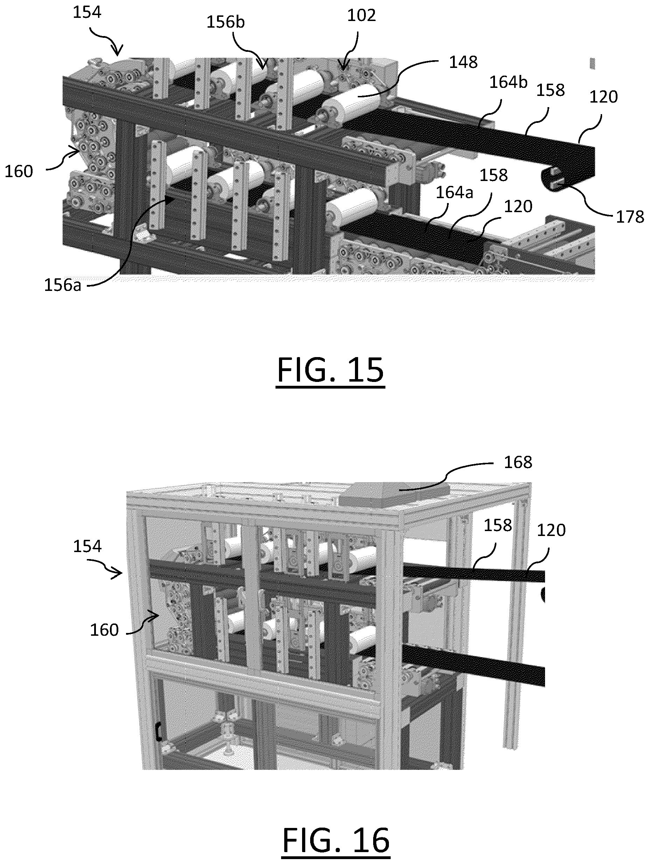

When the first metallic layer 158 arrives at the dry brushing unit 154, and as illustrated in FIG. 15 to 18, it may pass under a first set of rows 156a of brushes 148 in the form of rollers, the brushes 148 gently peeling the coating of precursory ink so as to separate it from the first metallic layer 158 (aluminum), and without damaging the first metallic layer 158 (aluminum) below. The brushes 148 may perform the brushing under dry conditions. For example, the pneumatic drying system may complete evaporation of any wet substances from the sheet 120 before brushing commences. As there may be a coating of precursory ink on both a top surface 164a and a bottom surface 164b of the first metallic layer 158 (aluminum), the dry brushing unit 154 may comprise a referral system 160, as illustrated in FIG. 15 to FIG. 18, that may turn the sheet 120 over so as to present the bottom surface 164b to a second set of rows 156b of brushes 148 upon completion of brushing of the top surface 164a. The brushes 148 of the dry brushing unit 154 may be the same brushes as the brushes 148 of the immersion brushing unit 142. As the brushes of the immersion brushing unit 142, they may also comprise bristles and a central axis for connection to the conveyor 102 and through which the rotational motion is controlled. For example, the brushes 148 of the dry brushing unit 154 be made of a plastic material or polymer (for example, a fine polymer such as nylon 11 (e.g. RILSAN)) and the brushes 148 of the immersion brushing unit 142 may also be made of the same plastic material or polymer. Alternatively, the brushes 148 of the dry brushing unit 154 may be different brushes to the brushes 148 of the immersion brushing unit 142.

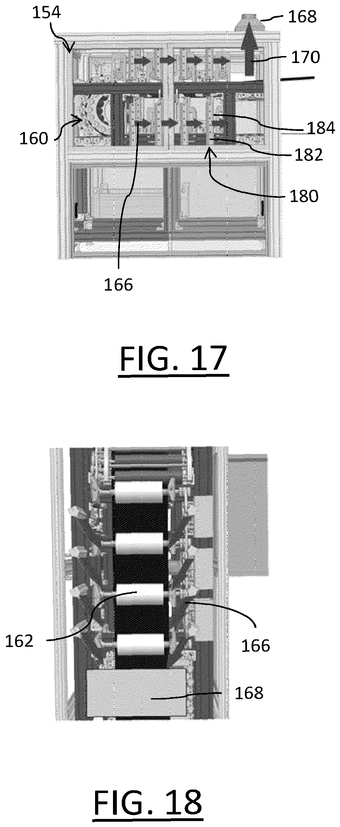

As brushing of the precursory ink begins, the precursory ink may begin to form a particle dust mixture around the layer 158. An air curtain system (e.g. vertical rods 184 and holes 182) may supply a current of air to impose a direction of movement on the mixture, such as that shown by the arrows 166 of FIG. 17 and FIG. 18, evacuating the mixture to a designated area and hence preventing pollution of mechanical elements of the brushing unit 154. As the brushing continues, at least one suction hood 168 may transport the separated precursory ink, as indicated by the arrow 170 in FIG. 17, to a recovery system such as, for example, a cyclo-filter having a storage capacity. As the metallic layer 158 becomes separated from the precursory ink, a rotary gripper system 178 may recover the layer 158 and deposit it in a storage box for collection.

As illustrated in FIG.s 19 to 22, the system may comprise a modular system. The system may comprise a processing chain 172 that may be mostly sealed (or entirely sealed) so as to limit the volume of air that may undergo gas or air treatment and so facilitate the transport of a precursory element as it becomes loose in the air during brushing. The pneumatic drying system may evaporate any liquid from the sheet throughout the entire processing chain. Sealing may also be preferable so as to secure the machine from human interaction, preventing machine damage and mitigating safety hazards. However, operators may access the system to execute maintenance and operation procedures via dedicated access doors and hatches provided at specific locations throughout the system (i.e. processing chain). All walls of the processing chain 172 may be transparent, and the processing chain 172 may comprise lighting and/or an electrical safety chain (including, for example, sensors and light curtains) to allow for easy visual monitoring of the recycling progress and avoid any risks to damage to personnel or the sheet.

Performing the method according to the above-described examples consequently enables separation of each element of a battery for future processing, i.e. the method enables the recycling of every element of the battery. The battery may enter the loading unit of the system in its original state, and may exit the layer removal steps and brushing steps of the system in the form of raw materials (in other words, the method recovers raw materials not only at the end of the method, but throughout its implementation).

Alternatively, a spool 174 may provide the rolled sheet directly to the conveyor 102 for feeding. The spool 174 may for example comprise a sheet comprising a layer of aluminum with a coating of precursory ink. The spool 174 may alternatively for example comprise a sheet comprising a layer of copper with a precursory coating of graphite. A jib crane or beam 176 may supply the spool of rolled sheet to the conveyor 102.

Aspects of the method were experimentally tested.

A VLP30P Fe spool was dismantled and scraping tests were performed on metallic layers under a fume hood to determine the readiness of coatings of precursory ink and graphite to come off the layers. Precursory ink was removed from an aluminum layer with a nylon brush. Graphite was removed from a copper layer with a copper wire brush. The results revealed that it is possible to easily separate the different primary constituents of the battery thanks to the brushing. The brushing was firm enough to allow effective removal of precursory ink of a pure quality, but was gentle enough so as not to damage the metallic layer itself.

Another test consisted of placing strips of aluminum with a coating of precursory ink and layers of copper with a coating of graphite in an immersion bath under ultrasound. The precursory ink separated from the aluminum strip in 3 minutes during emission of an ultrasound in the water, at a temperature of 40 °C. The peeling time (i.e. the time for the precursory element to separate from the metallic layer) decreased with increased temperature. Consequently, the liquid in which the metallic layer is submerged may be heated so as to further facilitate removal of the precursory element. The results show that the passing of the sheet through an immersion bath under ultrasound could also serve as a finishing step at the end of the method (i.e. the ultrasound could be generated after or during the step of brushing), depending on the intended subsequent post-processing of the materials.

Another test consisted of dismantling a VLP30P Fe spool, and scraping tests were performed on metallic layers under a fume hood to determine the capability of coatings of precursory ink and graphite to come off the layers. The quantity of electrolyte recovered in liquid form was very low. The electrolyte contained in the precursory ink and graphite evaporated quickly upon unrolling the spool. The separation of precursory ink from the aluminum layer was successfully achieved with a plastic brush, demonstrating that precursory element of a pure quality can be obtained from the metallic layer through the action of brushing.

## Claims

1. A method for recovering lithium (Li) and iron (Fe) from a substrate (S) containing LiFePO₄/C₍ₛ₎, wherein the substrate (S) further contains nickel and/or cobalt, the method comprising the steps of:
i.- Bringing the substrate (S) into contact with an aqueous leaching solution comprising an organic acid chosen from alkylsulfonic, alkylarylsulfonic, arylsulfonic acids, ethylenediamine-N,N'-bis(2-hydroxyphenylacetic acid) or a mixture thereof, and optionally an oxidizing agent, whereby a liquid phase L₁ rich in lithium and iron is recovered;
i'.- Extraction of the nickel and/or the cobalt from the liquid phase L₁ obtained in step i), according to an extraction step (E_{NC}), prior to step ii);
ii.- Precipitation of iron in the liquid phase L₁ obtained in step i) and having been subjected to the extraction step (E_{NC}), and recovery of the iron precipitate;
iii.- Precipitation of lithium in the L₂ liquid phase obtained in step ii) and recovery of the lithium precipitate; and optionally
iv.- Recovery of the liquid phase L₃ obtained in step iii) and recovery of the acid or organic solvent used in step i).

2. The method according to claim 1, wherein at step ii), an FePO₄ precipitate is recovered and/or wherein at step iii), an Li₂CO₃ precipitate is recovered.

3. The method according to claim 1 or 2, wherein step ii) comprises the addition of an ammonium hydroxide solution to the liquid phase L₁, step ii) being preferably carried out at a pH between 3 and 5.

4. The method according to any one of claims 1 to 3, wherein step iii) comprises the addition of an alkali metal carbonate or alkaline earth metal carbonate solution to the liquid phase L₂, step iii) being preferably carried out at a pH between 11 and 13.

5. The method according to any one of claims 1 to 4, wherein at step iv), the organic acid is recovered in liquid phase L₃ by distillation, wherein preferably the organic acid recovered is reused at step i).

6. The method according to any one of claims 1 to 5, wherein the organic acid solvent is selected from methylsulfonic acid, paratoluenesulfonic acid, benzenesulfonic acid, ethylenediamine-N,N'-bis(2-hydroxyphenylacetic acid) or a mixture thereof.

7. The method according to any one of claims 1 to 6, wherein the substrate (S) further contains manganese (Mn), wherein preferably the manganese is extracted from the liquid phase L₁ obtained in step i), according to an extraction step (E_{M}), prior to step ii), and wherein more preferably the extraction step (EM) is carried out before the extraction step (ENC).

8. The method according to any one of claims 1 to 7, wherein the nickel and/or the cobalt are extracted using a solvent chosen from bis(2,4,4-trimethylpentyl)phosphinic acid and bis(2,4,4-trimethylpentyl)dithiophosphinic acid.

9. The method according to any one of claims 1 to 8, wherein the substrate (S) is derived from an electrode material from used batteries of the LFP type.

10. A method for recycling LFP type batteries, said method comprising the steps of:
a.- Crushing of LFP-type batteries;
b.- Sieving the ground material obtained, whereby a fine fraction of substrate (S) containing LiFePO_{4/}C and further containing nickel and/or cobalt, is recovered; and
c.- Treatment of the substrate (S) according to any one of claims 1 to 9, whereby the lithium and the iron contained in the LFP type batteries are recovered.

11. A method for recycling a rolled sheet of a battery, the sheet comprising one or more layers including one or more metallic layers, each metallic layer respectively having a coating of a precursory element, the precursory element of the coating of at least one metallic layer being precursory ink thereby containing LiFePO₄/C₍ₛ₎ and further containing nickel and/or cobalt, the method comprising:
- unrolling the sheet;
- brushing each metallic layer for which the coating is precursory ink to separate the precursory ink, thereby recovering a substrate (S) containing LiFePO₄/C₍ₛ₎ and further containing nickel and/or cobalt; and
- implementing the method according to any one of claims 1 to 9 to recover lithium and iron from the substrate,
wherein preferably for at least one given metallic layer having a coating of precursory ink, the brushing of the at least one given metallic layer is performed under dry conditions, wherein more preferably the at least one given metallic layer having a coating of precursory ink is a layer of aluminum.

12. The method according to claim 11, wherein the brushing of the at least one given metallic layer having a coating of precursory ink is performed under suction, wherein preferably an air curtain system imposes a direction of evacuation of the precursory ink during the suction.

13. The method according to claim 11 or 12, wherein for at least one other metallic layer, the precursory element of the coating of the other metallic layer is graphite, the method comprising separating the graphite by brushing the at least one other metallic layer and/or by immersing the at least one other metallic layer in a liquid, wherein preferably the at least one other metallic layer having a coating of graphite is a layer of copper, and wherein preferably the method further comprises the generation of an ultrasound in the liquid during the separation of the graphite.

14. The method according to any one of claims 11 to 13, wherein the sheet comprises multiple layers, the method comprising:
- separating the layers during the unrolling using suction,
wherein preferably the multiple layers comprise the one or more metallic layers and at least one plastic layer.

15. The method according to any one of claims 11 to 14, wherein the brushing of each metallic layer comprises brushing a top surface and/or a bottom surface of the one or more metallic layers ; and/or
wherein the brushing is performed by at least one brush comprising bristles, wherein preferably the bristles comprise a polymer, a plastic and/or a metal, wherein preferably the at least one brush has a diameter ranging from 10 mm to 500 mm, for example from 60 mm to 160 mm,
wherein preferably the bristles have a diameter ranging from 0.1 mm to 5 mm, for example from 0.4 mm to 1.4 mm,
wherein preferably the at least one brush rotates, the brush rotating and the sheet advancing in a same direction and the brush rotating at a given speed, for example, a speed higher than 100 rpm and/or lower than 1000 rpm, or a speed ranging from 100 rpm to 1000 rpm,
wherein preferably during the brushing, the brush applies an adjustable pressure to the sheet, the brush applying a pressure up to 100 kg, for example of up to more than 50 kg or up to 50 kg, and the pressure being adjustable in steps translating to a distance of the order of a millimeter or of a fraction of a millimeter, for example, by one tenth of a millimeter with a tolerance of +/-10%.

16. The method according to any one of claims 11 to 15, wherein the method comprises providing a longitudinal casing enclosing the rolled sheet, the method comprising a step of cutting each extremity of the casing and removing the rolled sheet from the casing or wherein the method comprises providing the rolled sheet on a spool.

17. Use of lithium and iron recovered from used batteries of the LFP type according to the method of claim 10 for the manufacture of a new electrode material for an LFP battery.

18. Method for recycling an electrode material containing LiFePO₄/C(s) for an LFP type battery, said process comprising the steps of:
- Recovery of lithium and iron from used battery electrode material of the LFP type according to the method of claim 10; and
- Implementation of recovered lithium and iron for the preparation of an electrode material containing LiFePO_{4/}C.
